# EUROPEAN PATENT SPECIFICATION

(11) **EP 2 995 769 B1**
(45) Date of publication and mention of the grant of the patent: **13.11.2019**
(21) Application number: 15184952.8
(22) Date of filing: 11.09.2015
(51) Int. Cl.: F01D 5/08, F02C 9/18, F04D 29/053, F02C 6/08, F04D 29/32, F04D 29/58

(54) **THERMAL REGULATION OF A TURBOMACHINE ROTOR**
WÄRMEREGELUNGSSYSTEME EINES TURBOMASCHINENROTORS
SYSTÈMES DE RÉGULATION THERMIQUE DE ROTOR DE TURBOMACHINE

(30) Priority: 12.09.2014 US 201462050033 P
(43) Date of publication of application: 16.03.2016
(73) Proprietor: United Technologies Corporation, Farmington, CT 06032 (US)
(72) Inventor: FORCIER, Matthew P., South Windsor, CT Connecticut 06074 (US); HIESTER, Paul J., Glastonbury, CT Connecticut 06033 (US)
(74) Representative: Dehns

(56) References cited:
- EP-A1- 0 180 533
- EP-A2- 2 959 109
- WO-A1-2014/070849
- US-A1- 2012 183 398
- US-A1- 2013 192 253

## Description

### BACKGROUND

The present disclosure relates to turbomachine components and systems, more specifically components and systems configured for thermal regulation thereof.

Turbomachine compressors include a series of blades connected to rotor disks which are operatively disposed on or about a shaft to rotate (e.g., high pressure compressors can be disposed rotatable relative to a shaft via bearings or the like). Each blade has a corresponding stator, which together with the blade, form a stage. The disks can include pathways at the bore portion which to allow cooling airflow to pass through close to the shaft.

Traditionally, a forward stage can include a bleed to allow cool air to flow from the rim of the rotor disk through rotor cavity, down toward the shaft through the bore holes, and out to a pressure sink (e.g., turbine). However, this type of cooling does not regulate temperature differentials in more aft stages of the compressor. At certain operational regimes, the rotor disks in aft stages can experience dramatic temperature differentials between the disk rim and the disk bore which stresses the disk material decreasing disk life. For example, in low power operation of a compressor, the shaft and/or bore can experience high heat whereas the rim experiences lower heat, causing material stress on the rotor disks. At higher power settings, the gas in the more aft stages becomes hotter due to high compression, and the rim of each rotor disk can be much hotter than the bore thereof, causing material stress.

WO 2014/070849 discloses a rotor having a bore cavity and a heat exchanger for cooling the rotor.

Such conventional methods and systems have generally been considered satisfactory for their intended purpose. However, there is still a need in the art for improved thermal regulation in turbomachines. The present disclosure provides a solution for this need.

### SUMMARY

In at least one aspect of this disclosure there is provided a turbomachine in accordance with claim 1, comprising: an aft stage including a rotor disk having a rotor disk bore hole and a rotor disk rim; a valve disposed within the turbomachine and in fluid communication with the rotor disk bore hole, wherein the valve is in selective fluid communication with a first pressure source, such that in a first position, the valve allows fluid to flow from the first pressure source, forward through the rotor disk bore hole of the aft stage, and radially outward along the aft rotor disk toward, and through, the aft rotor disk rim; and a forward stage rotor disk sealed at a forward stage rotor disk bore to prevent flow from any rotor disk aft thereof from flowing therethrough; characterised by: the rotor disk rim including a sealing feature and aft bleeds, allowing fluid to flow through the aft rotor disk rim and forward over the sealing feature.

The first pressure source can be a cold air source. The first pressure source can be a hot air source. The turbomachine can further include a second pressure source including a fluid of a different temperature than the first pressure source. In some embodiments, the first pressure source can be a cold air source and the second pressure source can be a hot air source.

The valve can be operatively connected to a control system for determining when to allow flow from the first pressure source. The valve can be configured to modify flow rate from the first pressure source. The valve can be configured to shut off flow from the first pressure source. In some embodiments, the valve can be operatively connected to a control system for determining when to allow flow from the first pressure source and/or the second pressure source based on an operational characteristic of the turbomachine.

The aft stage can include an anti-vortex tube disposed in a cavity between the aft rotor disk and a second rotor disk that is forward of the aft rotor disk to facilitate radially outward flow therein.

The turbomachine can further include at least one intermediate stage rotor disk that can include an intermediate stage rotor disk bore hole in fluid communication with the valve. Each intermediate stage rotor disk can include an anti-vortex tube disposed thereon to facilitate radially outward flow therealong. In such embodiments, each anti-vortex tube can be sized to balance flow rates of cooling flow between each stage.

In at least one aspect of this disclosure, a method in accordance with claim 13 includes determining an operational characteristic of a turbomachine, and providing an airflow to a rotor disk of a turbomachine compressor for thermal regulation of the rotor disk based on the operational characteristic. Providing an airflow can include modifying a state of a valve to allow at least one of a cold air or a hot air to flow to the rotor disk or to modify the total flow rate of the cold air and/or the hot air based on the operational characteristic.

Determining the operational characteristic can include determining the temperature of one or more components of the turbomachine. In some embodiments, determining the operational characteristic can include determining the speed of one or more components of the turbomachine. Determining the operational characteristic can include determining the power setting and/or output of the turbomachine.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below, by way of example only and with reference to certain figures, wherein:
Fig. 1 is a partial cross-sectional view of an embodiment of a portion of a turbomachine in accordance with this disclosure, shown including a plurality of rotor disks in accordance with this disclosure and a valve in a hot air configuration; and
Fig. 2 is a partial cross-sectional view of the embodiment of Fig. 1, showing the valve in a cold air configuration.

### DETAILED DESCRIPTION

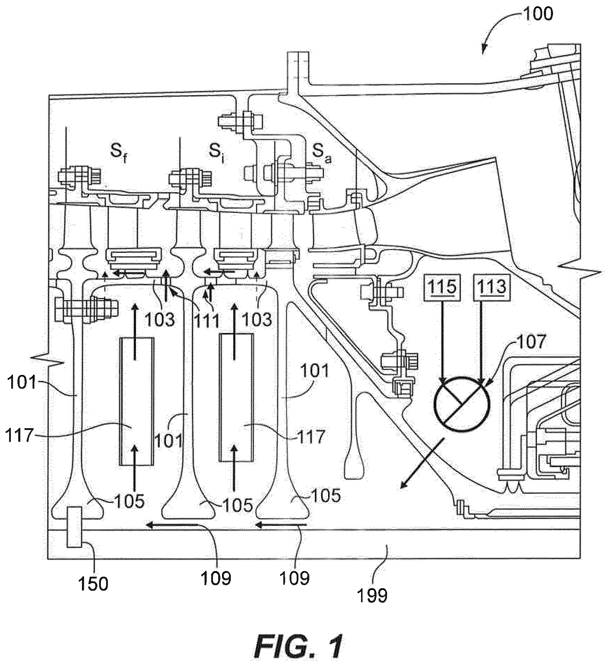

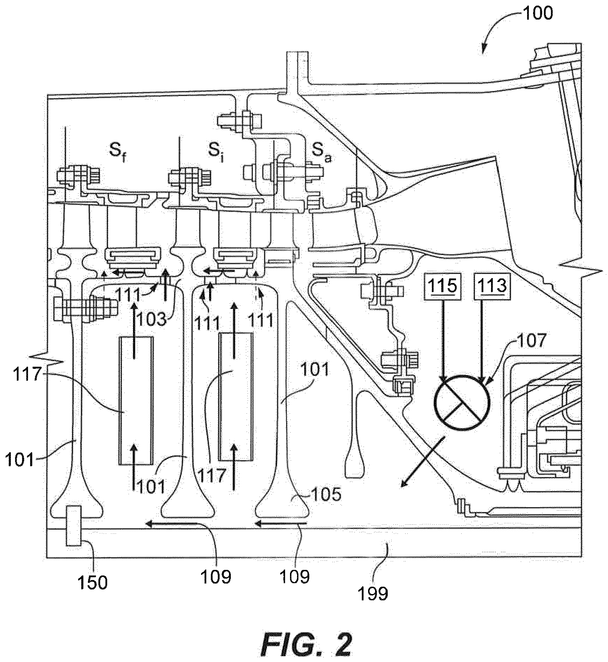

Reference will now be made to the drawings wherein like reference numerals identify similar structural features or aspects of the subject disclosure. For purposes of explanation and illustration, and not limitation, an illustrative view of an embodiment of a portion of a turbomachine is shown in accordance with the disclosure is shown in Figs. 1 and 2, and is designated generally by reference character 100. The systems and methods described herein can be used to enhance thermal regulation of portions of a turbomachine (e.g., to reduce rotor disk temperature differential between the rim and the bore).

In at least one aspect of this disclosure a turbomachine 100 includes an aft stage Sₐ, including rotor disk 101 disposed around a shaft 199, a bore basket, or any other suitable device. The rotor disk 101 is not necessarily connected to the shaft 199, but can be rotatable relative to shaft 199 on bearings or any other suitable arrangement. The rotor disk 101 includes a rotor disk bore hole 109 defined in a rotor disk bore portion 105 of the rotor disk 101. The rotor disk 101 can also include a rotor disk rim 103.

A valve 107 is disposed within the turbomachine 100 and is in fluid communication with the rotor disk bore hole 109. Any suitable valve 107 is contemplated for use as disclosed herein. The valve 107 is in selective fluid communication with at least a first pressure source (e.g., cold air source 113) such that, in a first position, the valve 107 allows fluid to flow from the first pressure source through the rotor disk bore hole 109 and radially outward along the rotor disk 101 toward the rotor disk rim 103. The valve 107 can also operate to mix various amounts of hot air (e.g., from hot air source 115) and cold air (e.g., from cold air source 113) and/or to control the total amount of flow supplied to the rotor disks 101 from one or more of the air source 113, 115 for achieving desired thermal regulation of rotor disks 101.

The valve 107 can be operatively connected to a suitable control system (not shown) for determining when to allow flow from one or more of the air sources 113, 115. The valve 107 can be configured to modify flow rate from one or more of the air sources 113, 115. In embodiments, the valve 107 can be configured to shut off flow from one or more of the air sources 113, 115 or always allow flow from at least one source or a mixture thereof.

In some embodiments, the valve 107 can be operatively connected to a control system for determining when to allow flow from the cold air source 113 and/or the hot air source 115 based on any suitable operational characteristic of the turbomachine (e.g., temperature of one or more components, operational speed, and/or operational power).

As shown in Fig. 1, the first pressure source can be a cold air source 113. It is also contemplated that the first pressure source can be a hot air source 115. As shown in the embodiment of Figs. 1 and 2, the turbomachine 100 can also include a second pressure source including a fluid of a different temperature than the first pressure source. For example, the first pressure source can be a cold air source 113 and the second pressure source can be a hot air source 115.

In embodiments as shown, the aft stage can include an anti-vortex tube 117 disposed in a cavity between rotor disks 101 to facilitate radially outward flow therein. The anti-vortex tube 117 can provide a pressure increase and can be sized to provide required flow rates to the cavity to suitably regulate the rotor disk 101 temperature differential.

The turbomachine 100 can further include at least one intermediate stage Sᵢ which includes a rotor disk 101 having a bore hole 109 also in fluid communication with the valve 107. In such a case, one or more intermediate stage rotor disks 101 can also include an anti-vortex tube 117 disposed thereon to facilitate radially outward flow therealong. In such embodiments, each anti-vortex tube 117 can be sized to balance the cooling flow in and between each stage. Some cavities may require more flow than others to provide the required thermal conditioning.

The turbomachine can further include a forward stage S_{f} having a rotor disk 101 that is sealed at the bore portion 105 using any suitable means (e.g., seal 150, using a disk 101 without a bore hole 109) so as to prevent flow from any rotor disk 101 that is aft thereof from flowing forward therethrough.

One or more bleeds 111 can be included in the rim 103 of one or more of the rotor disks 101 so as to allow flow to travel radially outward and through the rims 103 as shown in Figs. 1 and 2. One or more of the bleeds 111 can be located either upstream or downstream of a sealing feature (e.g., a labyrinth seal) that is disposed in the rim portion 103 of any of the disks 101. In some cases, bleeds 111 located upstream of the sealing feature allow seal temperatures to be regulated at the expense of extra pressure. Bleeds 111 located downstream of the sealing feature can require less pressure.

Creating such selective flow paths regulates a temperature differential of the rotor disks 101 such that the temperature differential between the rim 103 and the bore 105 of the rotor disks 101 is reduced during some operational regimes. For example, at idle, valve 107 can allow hot air from the hot air source to travel to the disks 101 (e.g., as shown in Fig. 1). During power up, any suitable mixture of hot air from the hot air source 115 and/or cold air from the cold air source 113 can be provided. At a full power setting, the valve 107 can allow cold air to flow to the disks 101 for maximum cooling (e.g., as shown in Fig. 2). During a cruise setting, the valve 107 can allow cold air, but of a suitable modified flow rate, to travel to the rotor disks 101 for optimized cooling to reduce thermal gradient between the rims 103 and bore 105.

While the embodiment depicted in Figs. 1 and 2 is shown in an exemplary engine, any other suitable arrangement of forward, intermediate, aft stages, and pluralities thereof to create a desired flow path therebetween are contemplated herein.

In at least one aspect of this disclosure, a method includes determining an operational characteristic of a turbomachine 100, and providing an airflow to a rotor disk of a turbomachine compressor for thermal regulation of a rotor disk 101 based on the operational characteristic. Providing an airflow can include modifying a state of a valve 107 to allow at least one of a cold air or a hot air to flow to the rotor disk 101 based on the operational characteristic.

Determining the operational characteristic can include determining the temperature of one or more components of the turbomachine 100. In some embodiments, determining the operational characteristic can include determining the speed of one or more components of the turbomachine 100. Determining the operational characteristic can include determining the power setting and/or output of the turbomachine 100.

The methods and systems of the present disclosure, as described above and shown in the drawings, provide for a turbomachine and/or rotor disk with superior properties including enhanced thermal regulation and overall lower temperature. While the apparatus and methods of the subject disclosure have been shown and described with reference to embodiments, those skilled in the art will readily appreciate that changes and/or modifications may be made thereto without departing from the scope of the subject disclosure as defined by the claims.

## Claims

1. A turbomachine (100), comprising:
an aft stage (Sa) including a rotor disk (101) having a rotor disk bore hole (109) and a rotor disk rim (103);
a valve (107) disposed within the turbomachine and in fluid communication with the rotor disk bore hole, wherein the valve is in selective fluid communication with a first pressure source (113, 115), such that in a first position, the valve allows fluid to flow from the first pressure source, forward through the rotor disk bore hole of the aft stage, and radially outward along the aft rotor disk toward, and through, the aft rotor disk rim; and
a forward stage rotor disk (101) sealed at a forward stage rotor disk bore to prevent flow from any rotor disk aft thereof from flowing therethrough; **characterised by**:
the rotor disk rim (103) including a sealing feature and aft bleeds (111), allowing fluid to flow through the aft rotor disk rim and forward over the sealing feature.

2. The turbomachine of claim 1, wherein the first pressure source is a cold air source (113).

3. The turbomachine of claim 1, wherein the first pressure source is a hot air source (115).

4. The turbomachine of claim 1, further including a second pressure source including a fluid of a different temperature than the first pressure source.

5. The turbomachine of claim 4, wherein the first pressure source is a cold air source (113) and the second pressure source is a hot air source (115).

6. The turbomachine of any preceding claim, wherein the aft stage includes an anti-vortex tube (117) disposed in a cavity between the aft rotor disk (101) and a second rotor disk that is forward of the aft rotor disk to facilitate radially outward flow therein.

7. The turbomachine of any preceding claim, including at least one intermediate stage rotor disk (101) including an intermediate stage rotor disk bore hole in fluid communication with the valve.

8. The turbomachine of claim 7, wherein each intermediate stage (Si) includes an anti-vortex (117) tube disposed thereon to facilitate radially outward flow therealong, preferably wherein each anti-vortex tube is sized to balance a pressure drop between each stage.

9. The turbomachine of any preceding claim, wherein the valve is operatively connected to a control system for determining when to allow flow from the first pressure source.

10. The turbomachine of any preceding claim, wherein the valve is configured to modify flow rate from the first pressure source.

11. The turbomachine of any preceding claim, wherein the valve is configured to shut off flow from the first pressure source.

12. The turbomachine of any preceding claim, wherein the valve is operatively connected to a control system for determining when to allow flow from the first pressure source and/or the second pressure source based on an operational characteristic of the turbomachine.

13. The turbomachine of claim 1, wherein the rotor disc rim (103) further comprises bleeds (111) which are upstream of the sealing feature.

14. A method comprising:
providing a turbomachine having:
an aft stage (Sa) including a rotor disk (101) having a rotor disk bore hole (109) and a rotor disk rim (103);
a valve (107) disposed within the turbomachine and in fluid communication with the rotor disk bore hole, wherein the valve is in selective fluid communication with a first pressure source (113, 115), such that in a first position, the valve allows fluid to flow from the first pressure source, forward through the rotor disk bore hole of the aft stage, and radially outward along the aft rotor disk toward, and through, the aft rotor disk rim; and
a forward stage rotor disk (101) sealed at a forward stage rotor disk bore to prevent flow from any rotor disk aft thereof from flowing therethrough; and
the rotor disk rim (103) including a sealing feature and aft bleeds (111), allowing fluid to flow through the aft rotor disk rim and forward over the sealing feature;
the method further comprising:
determining an operational characteristic of the turbomachine (100); and
providing high pressure air, via modifying the state of the valve to allow fluid flow, to the rotor disk (101) of the turbomachine compressor for thermal regulation of the rotor disk based on the operational characteristic.

15. The method of claim 14, wherein providing an airflow includes modifying a state of the valve (107) to allow at least one of a cold air (113) or a hot air (115) to flow to the rotor disk or to modify the total flow rate of the cold air and/or the hot air based on the operational characteristic, preferably wherein determining the operational characteristic includes determining the temperature of one or more components of the turbomachine, preferably wherein determining the operational characteristic includes determining the speed of one or more components of the turbomachine, preferably wherein determining the operational characteristic includes determining the power setting and/or output of the turbomachine.

## Patentansprüche

1. Turbomaschine (100), umfassend:
eine hintere Stufe (Sa), die eine Rotorscheibe (101) beinhaltet, die ein Rotorscheibenbohrloch (109) und einen Rotorscheibenrand (103) aufweist;
ein Ventil (107), das innerhalb der Turbomaschine angeordnet ist und in Fluidkommunikation mit dem Rotorscheibenbohrloch steht, wobei das Ventil in selektiver Fluidkommunikation mit einer ersten Druckquelle (113, 115) steht, sodass das Ventil in einer ersten Position zulässt, dass Fluid von der ersten Druckquelle nach vorne durch das Rotorscheibenbohrloch der hinteren Stufe und radial auswärts entlang der hinteren Rotorscheibe in Richtung des und durch den hinteren Rotorscheibenrand(es) strömt; und
eine Rotorscheibe vorderer Stufe (101), die an einer Rotorscheibenbohrung vorderer Stufe abgedichtet ist, um zu verhindern, dass Strömung von einer beliebigen Rotorscheibe dahinter dort hindurch strömt; **dadurch gekennzeichnet, dass**:
der Rotorscheibenrand (103) ein Dichtungsmerkmal und hintere Entlüftungen (111) beinhaltet, die zulassen, dass Fluid durch den hinteren Rotorscheibenrand und nach vorne über das Dichtungsmerkmal strömt.

2. Turbomaschine nach Anspruch 1, wobei die erste Druckquelle eine Kaltluftquelle (113) ist.

3. Turbomaschine nach Anspruch 1, wobei die erste Druckquelle eine Warmluftquelle (115) ist.

4. Turbomaschine nach Anspruch 1, ferner beinhaltend eine zweite Druckquelle, die ein Fluid mit einer anderen Temperatur als die erste Druckquelle beinhaltet.

5. Turbomaschine nach Anspruch 4, wobei die erste Druckquelle eine Kaltluftquelle (113) ist und die zweite Druckquelle eine Warmluftquelle (115) ist.

6. Turbomaschine nach einem vorhergehenden Anspruch, wobei die hintere Stufe ein Antiwirbelrohr (117) beinhaltet, das in einem Hohlraum zwischen der hinteren Rotorscheibe (101) und einer zweiten Rotorscheibe angeordnet ist, die sich vor der hinteren Rotorscheibe befindet, um radial auswärtige Strömung darin zu vereinfachen.

7. Turbomaschine nach einem vorhergehenden Anspruch, beinhaltend zumindest eine Zwischenstufenrotorscheibe (101), die ein Zwischenstufenrotorscheibenbohrloch in Fluidkommunikation mit dem Ventil beinhaltet.

8. Turbomaschine nach Anspruch 7, wobei jede Zwischenstufe (Si) ein Antiwirbelrohr (117) beinhaltet, das daran angeordnet ist, um radial auswärtige Strömung dort entlang zu vereinfachen, wobei jedes Antiwirbelrohr bevorzugt größenbemessen ist, um einen Druckabfall zwischen jeder Stufe auszugleichen.

9. Turbomaschine nach einem vorhergehenden Anspruch, wobei das Ventil mit einem Steuersystem wirkverbunden ist, um zu bestimmen, wann Strömung von der ersten Druckquelle zuzulassen ist.

10. Turbomaschine nach einem vorhergehenden Anspruch, wobei das Ventil konfiguriert ist, um die Strömungsrate von der ersten Druckquelle zu modifizieren.

11. Turbomaschine nach einem vorhergehenden Anspruch, wobei das Ventil konfiguriert ist, um Strömung von der ersten Druckquelle abzustellen.

12. Turbomaschine nach einem vorhergehenden Anspruch, wobei das Ventil mit einem Steuersystem wirkverbunden ist, um basierend auf einer Betriebseigenschaft der Turbomaschine zu bestimmen, wann Strömung von der ersten Druckquelle und/oder der zweiten Druckquelle zuzulassen ist.

13. Turbomaschine nach Anspruch 1, wobei der Rotorscheibenrand (103) ferner Entlüftungen (111) umfasst, die sich stromaufwärts des Dichtungsmerkmals befinden.

14. Verfahren, umfassend:
Bereitstellen einer Turbomaschine, die Folgendes aufweist:
eine hintere Stufe (Sa), die eine Rotorscheibe (101) beinhaltet, die ein Rotorscheibenbohrloch (109) und einen Rotorscheibenrand (103) aufweist;
ein Ventil (107), das innerhalb der Turbomaschine angeordnet ist und in Fluidkommunikation mit dem Rotorscheibenbohrloch steht, wobei das Ventil in selektiver Fluidkommunikation mit einer ersten Druckquelle (113, 115) steht, sodass das Ventil in einer ersten Position zulässt, dass Fluid von der ersten Druckquelle nach vorne durch das Rotorscheibenbohrloch der hinteren Stufe und radial auswärts entlang der hinteren Rotorscheibe in Richtung des und durch den hinteren Rotorscheibenrand(es) strömt; und
eine Rotorscheibe vorderer Stufe (101), die an einer Rotorscheibenbohrung vorderer Stufe abgedichtet ist, um zu verhindern, dass Strömung von einer beliebigen Rotorscheibe dahinter dort hindurch strömt; und wobei
der Rotorscheibenrand (103) ein Dichtungsmerkmal und hintere Entlüftungen (111) beinhaltet, die zulassen, dass Fluid durch den hinteren Rotorscheibenrand und nach vorne über das Dichtungsmerkmal strömt;
wobei das Verfahren ferner Folgendes umfasst:
Bestimmen einer Betriebseigenschaft der Turbomaschine (100); und
Bereitstellen von Hochdruckluft durch Modifizieren des Zustands des Ventils, um Fluidströmung zu der Rotorscheibe (101) des Turbomaschinenverdichters zur Wärmeregulierung der Rotorscheibe basierend auf der Betriebseigenschaft zuzulassen.

15. Verfahren nach Anspruch 14, wobei das Bereitstellen eines Luftstroms das Modifizieren eines Zustands des Ventils (107) beinhaltet, um zuzulassen, dass zumindest eines von einer Kaltluft (113) oder einer Warmluft (115) zu der Rotorscheibe strömt, oder um die Gesamtströmungsrate der Kaltluft und/oder der Warmluft basierend auf der Betriebseigenschaft zu modifizieren, wobei das Bestimmen der Betriebseigenschaft bevorzugt das Bestimmen der Temperatur von einer oder mehreren Komponenten der Turbomaschine beinhaltet, wobei das Bestimmen der Betriebseigenschaft bevorzugt das Bestimmen der Geschwindigkeit von einer oder mehreren Komponenten der Turbomaschine beinhaltet, wobei das Bestimmen der Betriebseigenschaft bevorzugt das Bestimmen der Leistungseinstellung und/oder Ausgabe der Turbomaschine beinhaltet.

## Revendications

1. Turbomachine (100), comprenant :
un étage arrière (Sa) comportant un disque de rotor (101) ayant un trou d'alésage de disque de rotor (109) et un rebord de disque de rotor (103) ;
une vanne (107) disposée à l'intérieur de la turbomachine et en communication fluidique avec le trou d'alésage de disque de rotor, dans laquelle la vanne est en communication fluidique sélective avec une première source de pression (113, 115), de sorte que, dans une première position, la vanne permette au fluide de s'écouler à partir de la première source de pression, vers l'avant à travers le trou d'alésage de disque de rotor de l'étage arrière, et radialement vers l'extérieur le long du disque de rotor arrière vers, et à travers, le rebord de disque de rotor arrière ; et
un disque de rotor d'étage avant (101) rendu étanche au niveau d'un alésage de disque de rotor d'étage avant pour empêcher l'écoulement à partir d'un quelconque disque de rotor à l'arrière de celui-ci de s'écouler au travers ; **caractérisée par** :
le rebord de disque de rotor (103) comportant une particularité d'étanchéité et des saignées arrière (111), permettant au fluide de s'écouler à travers le rebord de disque de rotor arrière et à l'avant sur la particularité d'étanchéité.

2. Turbomachine selon la revendication 1, dans laquelle la première source de pression est une source d'air froid (113).

3. Turbomachine selon la revendication 1, dans laquelle la première source de pression est une source d'air chaud (115).

4. Turbomachine selon la revendication 1, comportant en outre une seconde source de pression comportant un fluide d'une température différente de celle de la première source de pression.

5. Turbomachine selon la revendication 4, dans laquelle la première source de pression est une source d'air froid (113) et la seconde source de pression est une source d'air chaud (115).

6. Turbomachine selon une quelconque revendication précédente, dans laquelle l'étage arrière comporte un tube anti-vortex (117) disposé dans une cavité entre le disque de rotor arrière (101) et un second disque de rotor qui est à l'avant du disque de rotor arrière pour faciliter l'écoulement radialement vers l'extérieur à l'intérieur.

7. Turbomachine selon une quelconque revendication précédente, comportant au moins un disque de rotor d'étage intermédiaire (101) comportant un trou d'alésage de disque de rotor d'étage intermédiaire en communication fluidique avec la vanne.

8. Turbomachine selon la revendication 7, dans laquelle chaque étage intermédiaire (Si) comporte un tube anti-vortex (117) disposé dessus pour faciliter l'écoulement radialement vers l'extérieur tout au long, de préférence dans laquelle chaque tube anti-vortex est dimensionné pour équilibrer une chute de pression entre chaque étage.

9. Turbomachine selon une quelconque revendication précédente, dans laquelle la vanne est raccordée opérationnellement à un système de commande pour déterminer quand permettre l'écoulement à partir de la première source de pression.

10. Turbomachine selon une quelconque revendication précédente, dans laquelle la vanne est conçue pour modifier un débit à partir de la première source de pression.

11. Turbomachine selon une quelconque revendication précédente, dans laquelle la vanne est conçue pour arrêter l'écoulement à partir de la première source de pression.

12. Turbomachine selon une quelconque revendication précédente, dans laquelle la vanne est raccordée opérationnellement à un système de commande pour déterminer quand permettre l'écoulement à partir de la première source de pression et/ou de la seconde source de pression sur la base d'une caractéristique opérationnelle de la turbomachine.

13. Turbomachine selon la revendication 1, dans laquelle le rebord de disque de rotor (103) comprend en outre des saignées (111) qui sont en amont de la particularité d'étanchéité.

14. Procédé comprenant :
la fourniture d'une turbomachine ayant :
un étage arrière (Sa) comportant un disque de rotor (101) ayant un trou d'alésage de disque de rotor (109) et un rebord de disque de rotor (103) ;
une vanne (107) disposée à l'intérieur de la turbomachine et en communication fluidique avec le trou d'alésage de disque de rotor, dans lequel la vanne est en communication fluidique sélective avec une première source de pression (113, 115), de sorte que, dans une première position, la vanne permette au fluide de s'écouler à partir de la première source de pression, vers l'avant à travers le trou d'alésage de disque de rotor de l'étage arrière, et radialement vers l'extérieur le long du disque de rotor arrière vers, et à travers, le rebord de disque de rotor arrière ; et
un disque de rotor d'étage avant (101) rendu étanche au niveau d'un alésage de disque de rotor d'étage avant pour empêcher l'écoulement à partir d'un quelconque disque de rotor à l'arrière de celui-ci de s'écouler au travers ; et
le rebord de disque de rotor (103) comportant une particularité d'étanchéité et des saignées arrière (111), permettant au fluide de s'écouler à travers le rebord de disque de rotor arrière et vers l'avant sur la particularité d'étanchéité ;
le procédé comprenant en outre :
la détermination d'une caractéristique opérationnelle de la turbomachine (100) ; et
la fourniture d'air haute pression, par la modification de l'état de la vanne pour permettre au fluide de s'écouler, au disque de rotor (101) du compresseur de turbomachine pour une régulation thermique du disque de rotor sur la base de la caractéristique opérationnelle.

15. Procédé selon la revendication 14, dans lequel la fourniture d'un écoulement d'air comporte la modification d'un état de la vanne (107) pour permettre à au moins l'un d'un air froid (113) ou d'un air chaud (115) de s'écouler vers le disque de rotor ou pour modifier le débit total de l'air froid et/ou de l'air chaud sur la base de la caractéristique opérationnelle, dans lequel de préférence la détermination de la caractéristique opérationnelle comporte la détermination de la température d'un ou de plusieurs composants de la turbomachine, dans lequel de préférence la détermination de la caractéristique opérationnelle comporte la détermination de la vitesse d'un ou de plusieurs composants de la turbomachine, dans lequel de préférence la détermination de la caractéristique opérationnelle comporte la détermination du réglage et/ou de la sortie de puissance de la turbomachine.
